# EUROPÄISCHE PATENTANMELDUNG

(11) **EP 3 537 004 A1**
(43) Veröffentlichungstag der Anmeldung: **11.09.2019**
(21) Anmeldenummer: 19160944.5
(22) Anmeldetag: 06.03.2019
(51) Int. Cl.: F16H 49/00, F16C 35/063

(54) **VORRICHTUNG ZUM MONTIEREN VON RADIALFLEXIBLEN WÄLZLAGERN AUF WELLENGENERATOREN**

(30) Priorität: 08.03.2018 LU 100732
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft eine Vorrichtung zum Montieren von radialflexiblen Wälzlagern auf Wellengeneratoren, mittels der jeweils ein radialflexibles Wälzlager oval, insbesondere elliptisch, vorverformbar und anschließend auf den Lagersitz eines Wellengenerators aufschiebbar ist. Die Vorrichtung zeichnet sich dadurch aus, dass sie zur Verwendung mit wenigstens zwei unterschiedlichen Wellengeneratortypen ausgebildet ist und dazu, ein radialflexibles Wälzlager in eine von wenigstens zwei unterschiedlichen ovalen, insbesondere elliptischen, Formen vorzuverformen, wobei jedem Wellengeneratortyp eine der unterschiedlichen ovalen, insbesondere elliptischen, Formen zugeordnet ist. Es ist eine Aufnahme vorhanden, in der ein Wellengenerator, insbesondere zwangsgeführt, mit einer typspezifischen Montageausrichtung seiner Hochachse anordenbar ist, wobei die Montageausrichtung ausschließlich nur dann parallel zur Vorverformungsausrichtung der Hochachse des jeweils vorverformten Wälzlagers ist, wenn die Form des vorverformten Wälzlagers die dem Wellengeneratortyp des in der Aufnahme angeordneten Wellengenerators zugeordnete Form ist.

## Beschreibung

Die Erfindung betrifft eine Vorrichtung zum Montieren von radialflexiblen Wälzlagern auf Wellengeneratoren, mittels der jeweils ein radialflexibles Wälzlager oval, insbesondere elliptisch, vorverformbar und anschließend auf den Lagersitz eines Wellengenerators aufschiebbar ist.

Die Erfindung betrifft außerdem ein Verfahren zum Montieren von radialflexiblen Wälzlagern auf Wellengeneratoren.

Die Erfindung betrifft darüber hinaus einen Wellengenerator zur Verwendung mit einer erfindungsgemäßen Vorrichtung und/oder zur Verwendung bei der Ausführung eines erfindungsgemäßen Verfahrens, sowie ein Spannungswellengetriebe, das einen solchen Wellengenerator beinhaltet.

Ein Spannungswellengetriebe besitzt zumeist wenigstens ein starres, im Querschnitt kreisförmiges, innenverzahntes Zahnrad (Circularspline oder Dynamicspline) und ein flexibles außenverzahntes Zahnrad (Flexspline), das in dem von dem starren, innenverzahnten Zahnrad umgebenen Raumvolumen angeordnet ist. In dem von dem außenverzahnten Zahnrad umgebenen Bauraum ist ein zumeist elliptischer Wellengenerator rotierbar angeordnet, dessen Außenumfang einen Lagersitz für ein radialflexibles Wälzlager aufweist. Über das radialflexible Wälzlager steht der Wellengenerator mit dem radialflexiblen, außenverzahnten Zahnrad in Kontakt. Das radialflexible Wälzlager ermöglicht es, den Wellengenerator relativ zu dem radialflexiblen, außenverzahnte Zahnrad rotieren zu können. Der Wellengenerator biegt das Wälzlager und das radialflexible, außenverzahnte Zahnrad zu einer elliptischen Form, so dass die Verzahnungen des innenverzahnten Zahnrades und des flexiblen außenverzahnten Zahnrades an jedem Ende der Ellipsen-Hauptachse (Hochachse) miteinander in Eingriff kommen.

Das radialflexible, außenverzahnte Zahnrad weist eine geringere Anzahl von Zähnen auf, als das starre, innenverzahnte Zahnrad. Wenn der Wellengenerator rotiert, wälzt daher die Außenseite des außenverzahnten Zahnrades auf der Innenseite des innenverzahnten, starren Zahnrades ab, wobei die Zähne des flexiblen außenverzahnten Zahnrades an gegenüberliegenden Seiten umlaufend in und außer Eingriff mit den Zähnen des starren innenverzahnten Zahnrades gelangen. Daher kommt es auf Grund des Unterschiedes der Zähneanzahlen zu einer Relativdrehung des radialflexiblen, außenverzahnten Zahnrades relativ zu dem starren, innenverzahnten Zahnrad, wenn der Wellengenerator rotiert wird.

Ein solches Spannungswellengetriebe, bei dem der Wellengenerator derart ausgebildet ist, dass die Verzahnung des radialflexiblen, außenverzahnten Zahnrades an zwei Stellen in die Verzahnung des innenverzahnten Zahnrades eingreift, ist beispielsweise aus EP 2 574 745 A1 bekannt.

Der Wellengenerator muss nicht zwingend elliptisch ausgebildet sein. Vielmehr ist jede von der Kreisform abweichende Form möglich, die im Ergebnis den beschriebenen Eingriff der Verzahnung des flexiblen, außenverzahnten Zahnrades in die Verzahnung des innenverzahnten Zahnrades bewirkt.

Spannungswellengetriebe gibt es in unterschiedlichen Baugrößen und mit unterschiedlichen Übersetzungsverhältnissen. Insbesondere ist es üblich, dass Spannungswellengetriebe derselben Baugröße mit unterschiedlichen Übersetzungsverhältnissen angeboten werden. Hierbei ist es oft so, dass sich die Wellengeneratoren von Spannungswellengetrieben mit unterschiedlichen Übersetzungsverhältnissen voneinander unterscheiden und insoweit unterschiedlichen Wellengeneratortypen zuzuordnen sind.

Oft weisen die Wellengeneratoren für Spannungswellengetriebe einer geringeren Übersetzung bzw. Untersetzung eine größere Differenz der Länge von großer und kleiner Halbachse auf, als die Wellengeneratoren für Spannungswellengetriebe gleicher Baugröße einer größeren Übersetzung. Dies ist oftmals darauf zurück zu führen, dass die Zahnräder von Spannungswellengetrieben einer geringeren Übersetzung bzw. Untersetzung in der Regel eine geringere Anzahl von Zähnen, jedoch eine größere Zahnhöhe aufweisen. Die Differenz der Längen von großer und kleiner Halbachse des Teils des Wellengenerators, der den Lagersitz aufweist, muss nämlich, damit das Spannungswellengetriebe funktionieren kann, so groß sein, dass die Zähne des flexiblen außenverzahnten Zahnrades (Flexspline) relativ zu einem innenverzahnten Hohlrad (Circularspline) an zwei gegenüberliegenden Stellen umlaufend radial in Eingriff und außer Eingriff bewegt werden können.

Die zur Montage auf einem Lagersitz eines Wellengenerators bestimmten radialflexiblen Wälzlager sind nach ihrer Herstellung und vor ihrer Weiterverarbeitung kreisrund ausgebildet. Um originär kreisrunde radialflexible Wälzlager axial auf ovale Lagersitze aufschieben zu können, werden die Wälzlager jeweils durch Einspannen mittels einer Spannvorrichtung in eine ovale Form gedrückt, wodurch es ermöglicht wird, das vorverformte Wälzlager anschließend in axialer Richtung auf den Lagersitz des Wellengenerators aufzuschieben.

Es ist die Aufgabe der vorliegenden Erfindung, eine Vorrichtung anzugeben, die vielseitig ausgebildet ist, um flexibel radialflexible Wälzlager auf Wellengeneratoren montieren zu können.

Die Aufgabe wird durch eine Vorrichtung der eingangs genannten Art gelöst, die dadurch gekennzeichnet ist, dass
a. die Vorrichtung zur Verwendung mit wenigstens zwei unterschiedlichen Wellengeneratortypen ausgebildet ist und dazu ausgebildet ist, ein radialflexibles Wälzlager in eine von wenigstens zwei unterschiedlichen ovalen, insbesondere elliptischen, Formen vorzuverformen, wobei jedem Wellengeneratortyp eine der unterschiedlichen ovalen, insbesondere elliptischen, Formen zugeordnet ist, und dass
b. eine Aufnahme vorhanden ist, in der ein Wellengenerator, insbesondere zwangsgeführt, mit einer typspezifischen Montageausrichtung seiner Hochachse anordenbar ist, wobei die Montageausrichtung ausschließlich nur dann parallel zur Vorverformungsausrichtung der Hochachse des jeweils vorverformten Wälzlagers ist, wenn die Form des vorverformten Wälzlagers die dem Wellengeneratortyp des in der Aufnahme angeordneten Wellengenerators zugeordnete Form ist.

Es ist eine weitere Aufgabe der vorliegenden Erfindung, ein Verfahren anzugeben, das es ermöglicht, radialflexible Wälzlager flexibel und vielseitig auf Wellengeneratoren montieren zu können.

Die weitere Aufgabe wird durch ein Verfahren gelöst, das dadurch gekennzeichnet ist, dass
a. Wellengeneratoren wenigstens zweier unterschiedliche Wellengeneratortypen verwendet werden, wobei jedem Wellengeneratortyp eine unterschiedliche ovale, insbesondere elliptische, Form eines zu montierenden Wälzlagers zugeordnet ist, und dass
b. ein radialflexibles Wälzlager in eine von wenigstens zwei unterschiedlichen ovalen, insbesondere elliptischen, Formen vorverformt wird, und dass
c. eine Aufnahme vorhanden ist, in der ein Wellengenerator zwangsgeführt mit einer typspezifischen Montageausrichtung seiner Hochachse angeordnet wird, wobei die Montageausrichtung ausschließlich nur dann parallel zur Vorverformungsausrichtung der Hochachse des jeweils vorverformten Wälzlagers ist, wenn die Form des vorverformten Wälzlagers die dem Wellengeneratortyp des in der Aufnahme angeordneten Wellengenerators zugeordnete Form ist.

Die Erfindung hat den ganz besonderen Vorteil, dass ein zuverlässiges, fehlerfreies und insbesondere beschädigungsfreies Montieren von Wälzlagern auf den Lagersitzen von Wellengeneratoren ermöglicht ist, wobei insbesondere auch Wellengeneratoren unterschiedlicher Wellengeneratortypen, insbesondere Wellengeneratoren deren Lagersitze im Querschnitt eine unterschiedliche ovale Form aufweisen, verwendet werden können. Ein Lagersitz beinhaltet insbesondere die Außenumfangsfläche des Wellengenerators, an der die Innenumfangsfläche des Innenrings eines radialflexiblen Wälzlagers nach dem Vorgang des Aufschiebens anliegt.

Wie eingangs beschrieben, weisen unterschiedliche Spannungswellengetriebe, insbesondere auch Spannungswellengetriebe derselben Baugröße, oftmals Wellengeneratoren unterschiedlichen Wellengeneratortyps auf. Hierbei kann es durchaus auch sein, dass die Lagersitze von Wellengeneratoren unterschiedlichen Wellengeneratortyps denselben Außenumfang, jedoch im Querschnitt eine unterschiedliche ovale Form aufweisen. In der Praxis spielt hierbei eine besondere Rolle, dass die Unterschiede der Wellengeneratoren oftmals zu klein sind, um sie auf den ersten Blick zu erkennen, so dass Verwechslungen der Bauteile und/oder der zum Montieren erforderlichen Vorrichtungen bei der Montage von radialflexiblen Wälzlagern auf Wellengeneratoren nicht auszuschließen sind.

Würde man nun ein Wälzlager vor dem Montieren in eine ovale Form vorverformen, die einem ersten Wellengeneratortyp zugeordnet ist, jedoch anschließend das vorverformte Wälzlager axial auf einen Wellengenerator eines zweiten, unterschiedlichen Wellengeneratortyps aufzuschieben versuchen, kann es zu Beschädigungen an den Bauteilen und/oder an der zur Montage verwendeten Vorrichtung kommen. Allerdings ist es in besonders nachteiliger Weise dennoch durchaus möglich, ein vorverformtes Wälzlager axial auf einen Wellengenerator eines falschen, nämlich nicht der Vorverformung entsprechenden, Wellengeneratortyps aufzuschieben, wobei es außerdem vorkommen kann, dass die hierbei auftretenden Beschädigungen an den Bauteilen nicht mit bloßem Auge sichtbar sind und daher nicht sofort auffallen. Vielmehr fallen derartige Fehler erst nach einer Untersuchung auf, nachdem an dem fertig montierten Spannungswellengetriebe Funktionsstörungen aufgetreten sind und/oder die vorgesehene Lebensdauer nicht erreicht wurde. Bei der erfindungsgemäßen Vorrichtung und bei dem erfindungsgemäßen Verfahren ist diese Gefahr vorteilhaft vermieden.

Die Erfindung sieht vor, dass ein Wellengenerator in einer Aufnahme, insbesondere zwangsgeführt, mit einer typspezifischen Montageausrichtung seiner Hochachse angeordnet wird, wobei sich vorzugsweise die typspezifischen Montageausrichtungen für Wellengeneratoren zweier unterschiedlicher Wellengeneratortypen derart voneinander unterscheiden, dass ein axiales Aufschieben eines vorverformten Wälzlagers erst gar nicht möglich ist, wenn der Wellengeneratortyp des in die Aufnahme eingesetzten Wellengenerators nicht der Form des vorverformten Wälzlagers zugeordnet ist. Hierbei wird vorteilhaft ausgenutzt, dass ein axiales Aufschieben eines vorverformten Wälzlagers auf einen Lagersitz unmöglich ist, wenn die Montageausrichtung der Hochachse des Wellengenerators nicht parallel zur Vorverformungsausrichtung der Hochachse des mittels eines Vorverformungswerkzeugs vorverformten Wälzlagers ist.

Im Rahmen dieser Anmeldung ist mit dem Begriff "Hochachse" in Bezug auf einen Wellengenerator die Richtung gemeint, in der der Wellengenerator seine größte radiale Abmessung aufweist. Mit dem Begriff "Niedrigachse" ist in Bezug auf einen Wellengenerator die Richtung gemeint, in der der Wellengenerator seine kleinste radiale Abmessung aufweist. Zumeist ist bei einem Wellengenerator die Hochachse senkrecht zur Niedrigachse ausgerichtet.

Analog genauso werden die Begriffe "Hochachse" und "Niedrigachse" auch für vorverformte radialflexible Wälzlager gebraucht. Insoweit ist im Rahmen dieser Anmeldung mit dem Begriff "Hochachse" in Bezug auf ein vorverformtes, radialflexibles Wälzlager die Richtung gemeint, in der das vorverformte Wälzlager seine größte radiale Abmessung aufweist. Die Ausrichtung dieser Hochachse ist im Rahmen dieser Patentanmeldung als "Vorverformungsausrichtung der Hochachse des vorverformten Wälzlagers" bezeichnet. Mit dem Begriff "Niedrigachse" ist in Bezug auf ein vorverformtes, radialflexibles Wälzlager die Richtung gemeint, in der das vorverformte Wälzlager seine kleinste radiale Abmessung aufweist.

Bei einer besonderen Ausführung sind den unterschiedlichen ovalen, insbesondere elliptischen, Formen, in die zu verarbeitende Wälzlager vorverformbar sind, unterschiedliche Vorverformungsausrichtungen der Hochachse der Wälzlager zugeordnet. Hierbei kann insbesondere vorgesehen sein, dass ein in eine erste ovale Form vorverformtes Wälzlager, insbesondere automatisch, eine erste Vorverformungsausrichtung aufweist und dass ein in eine andere, von der ersten Form verschiedene ovale Form vorverformtes Wälzlager, insbesondere automatisch, eine andere Vorverformungsausrichtung als die erste Vorverformungsausrichtung aufweist.

Allerdings ist es auch möglich, dass den unterschiedlichen ovalen, insbesondere elliptischen, Formen, in die zu verarbeitende Wälzlager vorverformbar sind, dieselbe Vorverformungsausrichtung der Hochachse der Wälzlager zugeordnet, wobei bei einer solchen Ausführung sicher gestellt sein muss, dass die Montageausrichtungen der Wellengeneratoren unterschiedlichen Wellengeneratortyps unterschiedlich sind. Insoweit ist es ganz allgemein sowie alternativ oder zusätzlich dazu möglich, unterschiedliche Vorverformungsausrichtungen für in unterschiedliche Formen vorverformte Wälzlager vorzusehen. Vorteilhaft ist es alternativ oder zusätzlich auch möglich vorzusehen, dass die typspezifischen Montageausrichtungen unterschiedlicher Wellengeneratortypen voneinander verschieden sind.

Die Vorrichtung kann vorteilhaft ein Vorverformungswerkzeug aufweisen, mittels dem ein Wälzlager wahlweise in eine von wenigstens zwei unterschiedlichen ovalen, insbesondere elliptischen, Formen vorverformbar ist. Alternativ ist es auch möglich, dass die Vorrichtung mehrere unterschiedliche Vorverformungswerkzeuge aufweist, von denen jedes zum Vorverformen in wenigstens eine der unterschiedlichen ovalen, insbesondere elliptischen, Formen spezialisiert ist.

Bei einer ganz besonders vorteilhaften Ausführung ist die Aufnahme für den Wellengenerator, insbesondere eine Subaufnahme der Aufnahme für den Wellengenerator, dazu ausgebildet, mit einem Ausrichtungsindikator des Wellengenerators derart zusammen zu wirken, dass der Wellengenerator ausschließlich mit seiner typspezifischen Montageausrichtung oder ausschließlich mit seinen typspezifischen Montageausrichtungen in die Aufnahme einfügbar ist.

Wie weiter unten ausführlich beschrieben ist, kann ein Ausrichtungsindikator insbesondere ein an einem Hauptabschnitt eines Wellengenerators angebrachtes oder einstückig mit diesem hergestelltes Element sein, wobei der durch das Element gebildete Ausrichtungsindikator eine für den Wellengeneratortyp spezifische Form und/oder Größe und/oder Ausrichtung aufweist. Alternativ ist es auch möglich, dass der Ausrichtungsindikator durch eine Ausnehmung in einem Hauptabschnitt eines Wellengenerators gebildet ist, die eine für den Wellengeneratortyp spezifische Form und/oder Größe und/oder Ausrichtung aufweist. Der Hauptabschnitt ist der Abschnitt, insbesondere der axiale Abschnitt, des Wellengenerators, der den Lagersitz aufweist.

Ganz allgemein kann ein Ausrichtungsindikator insbesondere ein mechanisches Charakteristikum des Wellengenerators sein, das mechanisch abtastbar ist und das eine für den Wellengeneratortyp spezifische Form und/oder Größe und/oder Ausrichtung aufweist.

Es ist vorteilhaft insbesondere möglich, dass die Aufnahme für den Wellengenerator dazu ausgebildet ist, mechanisch, insbesondere ausschließlich mechanisch, mit einem Ausrichtungsindikator des Wellengenerators zusammen zu wirken.

Bei einer ganz besonders vorteilhaften Ausführung weist die Aufnahme eine Subaufnahme auf, die dazu ausgebildet und bestimmt ist, den Ausrichtungsindikator des jeweiligen Wellengenerators, insbesondere formschlüssig und/oder wenigstens teilweise, aufzunehmen. Insbesondere durch ein formschlüssiges Aufnehmen kann gewährleistet werden, dass ein Wellengenerator ausschließlich mit seiner ihm zugeordneten typspezifischen Montageausrichtung in der Aufnahme angeordnet werden kann.

Hierbei kann insbesondere vorgesehen sein, dass die Subaufnahme dazu ausgebildet ist, einen Ausrichtungsindikator des jeweiligen Wellengenerators, insbesondere formschlüssig und/oder wenigstens teilweise, aufzunehmen, der sich axial an einen den Lagersitz beinhaltenden Hauptabschnitt des Wellengenerators anschließt.

Alternativ oder zusätzlich kann die Subaufnahme auch dazu ausgebildet sein, einen Ausrichtungsindikator des jeweiligen Wellengenerators, insbesondere formschlüssig und/oder wenigstens teilweise, aufzunehmen, der mit einem Hauptabschnitt, der den Lagersitz aufweist, gemeinsam einstückig aus demselben Stück Rohmaterial hergestellt ist.

Es ist alternativ oder zusätzlich auch möglich, dass die Subaufnahme dazu ausgebildet ist, einen Ausrichtungsindikator des jeweiligen Wellengenerators, insbesondere formschlüssig, aufzunehmen, der radial über den Hauptabschnitt, der den Lagersitz aufweist, hervorsteht.

Bei einer besonderen Ausführung ist die Subaufnahme dazu ausgebildet, einen Ausrichtungsindikator des jeweiligen Wellengenerators, insbesondere formschlüssig und/oder wenigstens teilweise, aufzunehmen, der zusätzlich als Axialanschlag für das Wälzlager fungiert.

Von besonderem Vorteil ist eine Ausführung, bei der die Subaufnahme dazu ausgebildet ist, einen Ausrichtungsindikator des jeweiligen Wellengenerators, insbesondere formschlüssig und/oder wenigstens teilweise, aufzunehmen, der mit einer Außenkontur mit der Subaufnahme zusammen wirkt.

Alternativ oder zusätzlich ist es auch möglich, dass die Subaufnahme dazu ausgebildet ist, einen Ausrichtungsindikator des jeweiligen Wellengenerators, insbesondere formschlüssig und/oder wenigstens teilweise, aufzunehmen, der mit einer Innenkontur mit der Subaufnahme zusammen wirkt.

Die Außenkontur oder die Innenkontur können im Querschnitt beispielsweise eine ovale Form oder eine elliptische Form, oder eine polyederform oder eine hypotrochoidische Form aufweist. Grundsätzlich ist jedoch jegliche Form für den Ausrichtungsindikator verwendbar, die im Querschnitt von einer kreisrunden Form abweicht, wenn die Ausrichtungsindikatoren unterschiedlicher Wellengeneratoren relativ zum übrigen Wellengenerator ortsgleich angebracht werden sollen. Bei nicht ortsgleicher Anbringung des Ausrichtungsindikators ist es auch möglich, im Querschnitt kreisrunde Ausrichtungsindikatoren zu verwenden, wobei der Wellengeneratortyp dann daran erkennbar ist, dass sich die Anbringungsorte der Ausrichtungsindikatoren an den Wellengeneratoren voneinander unterscheiden.

Bei einer besonderen Ausführungsform ist vorgesehen, dass die Subaufnahme dazu ausgebildet ist, einen Ausrichtungsindikator, insbesondere formschlüssig und/oder wenigstens teilweise, aufzunehmen, der nicht kegelförmig ausgebildet ist und/oder der einen zylindrischen Anteil aufweist.

Vorzugsweise ist die erfindungsgemäße Vorrichtung derart ausgebildet, dass mit der Vorrichtung Wellengeneratoren verarbeitbar sind, bei denen der Lagersitz des Wellengenerators eines Wellengeneratortyps im Querschnitt eine andere ovale Form aufweist, als der Lagersitz des Wellengenerators eines anderen Wellengeneratortyps. Insbesondere kann vorteilhaft auch vorgesehen sein, dass der Vorrichtung Wellengeneratoren verarbeitbar sind, deren Lagersitze eine unterschiedliche ovale Formen, jedoch den gleichen Außenumfang aufweisen.

Insbesondere kann vorteilhaft vorgesehen sein, dass mit der Vorrichtung Wellengeneratoren verarbeitbar sind, bei denen sich die Ausrichtung und/oder die Position des Lagersitzes relativ zum Ausrichtungsindikator wellengeneratortypabhängig voneinander unterscheiden, und/oder dass mit der Vorrichtung Wellengeneratoren verarbeitbar sind, die bei einem ersten Wellengeneratortyp eine erste Ausrichtung und/oder Position des Lagersitzes relativ zum Ausrichtungsindikator aufweisen und bei einem zweiten Wellengeneratortyp eine zweite, von der ersten verschiedene, Ausrichtung und/oder Position des Lagersitzes relativ zum Ausrichtungsindikator aufweisen.

Wellengeneratoren, die mit einer erfindungsgemäßen Vorrichtung oder gemäß dem erfindungsgemäßen Verfahren verarbeitet werden können, können ganz unterschiedlich ausgebildet sein.

Bei einer besonders vorteilhaften Ausführung schließt sich ein Ausrichtungsindikator axial an einen den Lagersitz beinhaltenden Hauptabschnitt des Wellengenerators an. Insbesondere bei einer solchen Ausführung kann vorteilhaft vorgesehen sein, dass der Hauptabschnitt, der den Lagersitz aufweist, und der Ausrichtungsindikator gemeinsam einstückig aus demselben Stück Rohmaterial hergestellt sind.

Bei einer besonderen Ausführung steht der Ausrichtungsindikator radial über den den Lagersitz aufweisenden Hauptabschnitt des Wellengenerators hervor. Insbesondere hierbei kann der Ausrichtungsindikator zusätzlich als Axialanschlag für das Wälzlager ausgebildet sein.

Der Ausrichtungsindikator kann beispielsweise dazu ausgebildet sein, mit seiner Außenkontur mit einer Subaufnahme der Aufnahme der erfindungsgemäßen Vorrichtung, insbesondere formschlüssig, zusammen zu wirken.

Beispielsweise kann der Ausrichtungsindikator eine v-förmige Außenkontur aufweisen, während die Subaufnahme der Aufnahme für den Wellengenerator eine hierzu komplementäre v-förmige Gegenform aufweist.

Ganz grundsätzlich ist es von Vorteil, wenn der Ausrichtungsindikator ausschließlich in einer einzigen Ausrichtung mit der Subaufnahme zusammen wirkt. Insbesondere kann vorteilhaft vorgesehen sein, dass der Ausrichtungsindikator ausschließlich mit einer einzigen Ausrichtung in die Subaufnahme einführbar ist und bei anderen Ausrichtungen nicht in die Subaufnahme einführbar ist.

Der Ausrichtungsindikator kann auch dazu ausgebildet sein, mit einer an ihm ausgebildeten Innenkontur mit der Subaufnahme, insbesondere formschlüssig, zusammen zu wirken. Hierzu kann der Ausrichtungsindikator beispielsweise eine Ausnehmung, insbesondere in dem Hauptabschnitt des Wellengenerators, aufweisen oder durch einen Ausnehmung, insbesondere in dem Hauptabschnitt des Wellengenerators, gebildet sein, die die Innenkontur bereitstellt. Die Subaufnahme kann hierbei beispielsweise einen Vorsprung aufweisen, der formschlüssig in die Ausnehmung einfügbar ist, wobei es auch hierbei grundsätzlich von Vorteil ist, wenn der Ausrichtungsindikator ausschließlich mit einer einzigen Ausrichtung mit der Subaufnahme zusammen wirkt.

Die Außenkontur oder die Innenkontur kann im Querschnitt beispielsweise eine ovale Form oder eine elliptische Form, oder eine polyederform oder eine hypotrochoidische Form aufweisen.

Bei einer besonderen Ausführung ist der Ausrichtungsindikator nicht kegelförmig ausgebildet. Alternativ oder zusätzlich kann vorgesehen sein, dass der Ausrichtungsindikator einen zylindrischen Anteil aufweist.

Für eine flexible Produktion von unterschiedlichen Spannungswellengetrieben ist eine Ansammlung von mehreren Wellengeneratoren von besonderem Vorteil, wobei jeder der Wellengeneratoren einem von wenigstens zwei unterschiedlichen Wellengeneratortypen zugeordnet ist. Auf diese Weise steht für jeden Typ von herzustellendem Spannungswellengetriebe jeweils zumindest ein Wellengenerator des erforderlichen Wellengeneratortyps zur Verfügung.

Hierbei kann vorteilhaft insbesondere vorgesehen sein, dass jeder Wellengenerator einen typspezifischen Ausrichtungsindikator aufweist, wobei sich die Ausrichtungsindikatoren der Wellengeneratoren unterschiedlichen Wellengeneratortyps durch ihre Form voneinander unterscheiden und/oder durch ihre Größe voneinander unterscheiden und/oder durch ihre Ausrichtung relativ zu einem den Lagersitz aufweisenden Hauptabschnitt des Wellengenerators voneinander unterscheiden.

Insbesondere ist es möglich, dass der Lagersitz des Wellengenerators eines Wellengeneratortyps im Querschnitt eine andere ovale Form aufweist, als der Lagersitz des Wellengenerators eines anderen Wellengeneratortyps.

Bei einer besonderen Ausführung unterscheiden sich die Ausrichtung und/oder die Position des Lagersitzes relativ zum Ausrichtungsindikator wellengeneratortypabhängig voneinander. Alternativ oder zusätzlich ist es auch möglich, dass Wellengeneratoren eines ersten Wellengeneratortyps eine erste Ausrichtung und/oder Position des Lagersitzes relativ zum Ausrichtungsindikator aufweisen und Wellengeneratoren eines zweiten Wellengeneratortyps eine zweite, von der ersten verschiedene, Ausrichtung und/oder Position des Lagersitzes relativ zum Ausrichtungsindikator aufweisen.

Ganz besonders vorteilhaft ist ein Spannungswellengetriebe, das unter Verwendung einer erfindungsgemäßen Vorrichtung und/oder gemäß dem erfindungsgemäßen Verfahren hergestellt wurde. Bei einem solchen Spannungswellengetriebe ist weitgehend sichergestellt, dass es beim Aufziehen des radialflexiblen Wälzlagers auf den Wellengenerator nicht zu Beschädigungen gekommen ist, die bei der Herstellung unentdeckt geblieben sind.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ganz schematisch einen Teil eines Ausführungsbeispiels einer erfindungsgemäßen Vorrichtung bei Verwendung eines Wellengenerators eines ersten Wellengeneratortyps,
- Fig. 2: ganz schematisch den Teil des Ausführungsbeispiels einer erfindungsgemäßen Vorrichtung bei Verwendung eines Wellengenerators eines anderen Wellengeneratortyps,
- Fig. 3: schematisch ein erstes Ausführungsbeispiel eines Wellengenerators eines ersten Wellengeneratortyps zur Verwendung mit einer erfindungsgemäßen Vorrichtung,
- Fig. 4: schematisch ein zweites Ausführungsbeispiel eines Wellengenerators eines anderen Wellengeneratortyps zur Verwendung mit einer erfindungsgemäßen Vorrichtung,
- Fig. 5: schematisch in einer Draufsicht in Axialrichtung ein drittes Ausführungsbeispiel eines Wellengenerators zur Verwendung mit einer erfindungsgemäßen Vorrichtung,
- Fig. 6: das dritte Ausführungsbeispiel eines Wellengenerators in einer Seitenansicht,
- Fig. 7: schematisch in einer Draufsicht in Axialrichtung ein viertes Ausführungsbeispiel eines Wellengenerators zur Verwendung mit einer erfindungsgemäßen Vorrichtung,
- Fig. 8: schematisch in einer Draufsicht in Axialrichtung ein fünftes Ausführungsbeispiel eines Wellengenerators eines anderen Wellengeneratortyps zur Verwendung mit einer erfindungsgemäßen Vorrichtung,
- Fig. 9: schematisch in einer Draufsicht in Axialrichtung ein siebentes Ausführungsbeispiel eines Wellengenerator derselben Art, wie der in Fig. 8 gezeigte der Wellengenerator, der jedoch einem anderen Wellengeneratortyp angehört,
- Fig. 10: schematisch das erste Ausführungsbeispiel eines Wellengenerators aus einer anderen Blickrichtung,
- Fig. 11: schematisch das zweite Ausführungsbeispiel eines Wellengenerators aus einer anderen Blickrichtung.

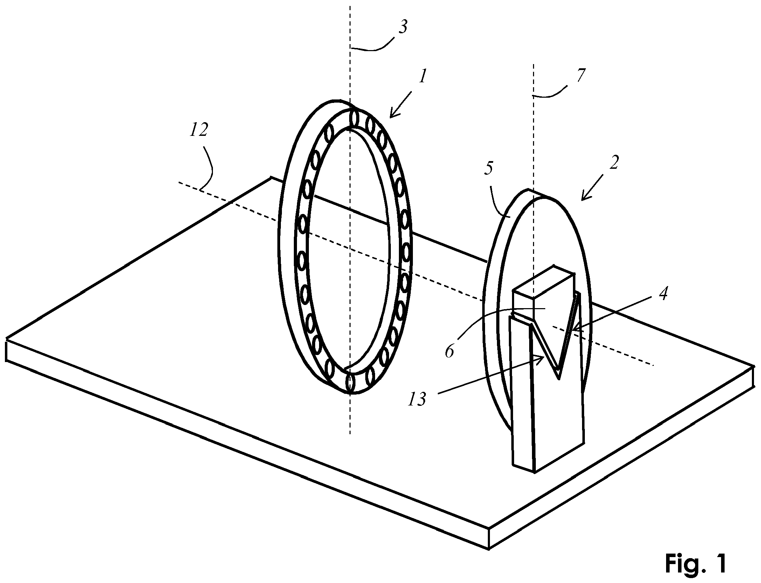

Fig. 1 zeigt einen Teil eines Ausführungsbeispiels einer erfindungsgemäßen Vorrichtung zum Montieren von radialflexiblen Wälzlagern 1 auf Wellengeneratoren 2. Die Vorrichtung beinhaltet ein in dieser Figur nicht dargestelltes Vorverformungswerkzeug, mittels dem das originär kreisrunde radialflexible Wälzlager 1, das auf einen Wellengenerator 2 aufgeschoben werden soll, in eine ovale, insbesondere elliptische, Form vorverformt wurde. Der besseren Übersichtlichkeit halber ist in Fig. 1 lediglich das in eine ovale Form vorverformte radialflexible Wälzlager 1 jedoch nicht das Vorverformungswerkzeug gezeigt.

Das vorverformte radialflexible Wälzlager 1 weist eine Vorverformungsausrichtung 3 auf, wobei die Vorverformungsausrichtung 3 durch die Ausrichtung der Hochachse des oval vorverformten radialflexible Wälzlager 1 definiert ist. Die Vorverformungsausrichtung 3 steht senkrecht zur Axialrichtung 12, entlang der das radialflexible Wälzlager 1 auf den Lagersitz 5 des Wellengenerators 2 aufgeschoben wird.

Mittels der gezeigten Vorrichtung könnte das radialflexible Wälzlager 1 auch in eine andere ovale Form vorverformt werden, wenn das radialflexible Wälzlager 1 auf einen Wellengenerator 2 eines anderen Wellengeneratortyps aufgeschoben werden soll.

Die Vorrichtung weist außerdem eine Aufnahme 4 auf, in der der Wellengenerator 2, auf dessen Lagersitz 5 das radialflexible Wälzlager 1 aufgeschoben werden soll, anordenbar ist. Die Aufnahme 4 beinhaltet eine Subaufnahme 13 für einen Ausrichtungsindikator 6 des Wellengenerators 2.

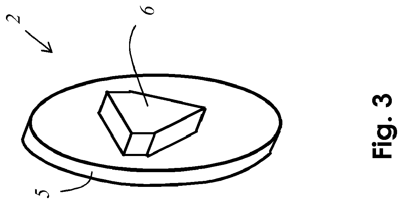

In dem in Figur 1 dargestellten Beispiel weist der Wellengenerator 2 einen Ausrichtungsindikator 6 auf. Die Subaufnahme 13 der Aufnahme 4 für den Wellengenerator 2 ist dazu ausgebildet, mit dem Ausrichtungsindikator 6 des Wellengenerators 2 derart zusammenzuwirken, dass der Wellengenerator 2 ausschließlich mit seiner typspezifischen Montageausrichtung 7, die durch die Ausrichtung seiner Hochachse definiert ist, in die Aufnahme 4 einfügbar ist. Der gewählten Vorverformung des radialflexiblen Wälzlagers 1 ist ein Wellengeneratortyp zugeordnet, wie ihn der in den Figuren 1 und 3 gezeigte Wellengenerator 2 aufweist. Die Montageausrichtung 7 steht ebenfalls senkrecht zur Axialrichtung 12, entlang der das radialflexible Wälzlager 1 auf den Lagersitz 5 des Wellengenerators 2 aufgeschoben wird.

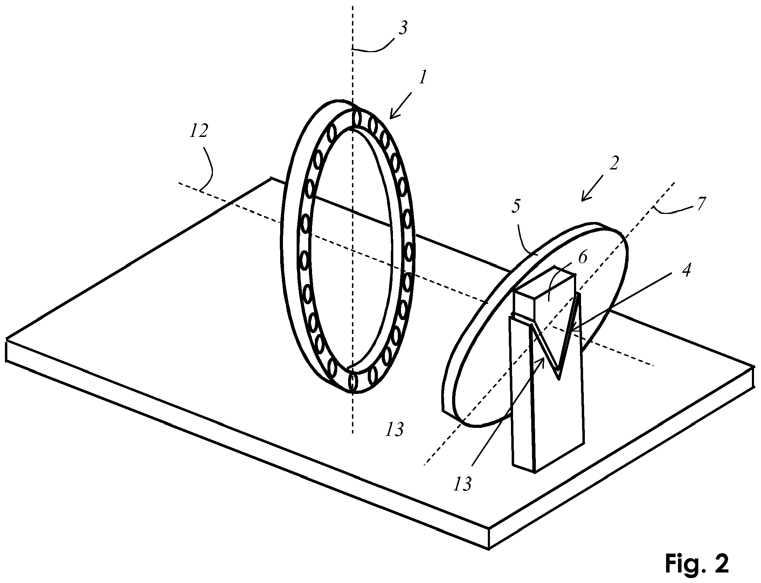

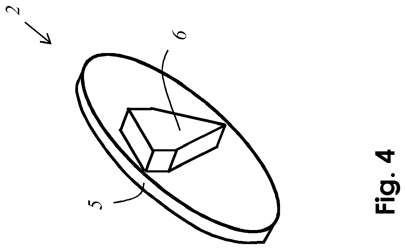

Es ist auch möglich, einen Wellengenerator 2 eines anderen Wellengeneratortyps in der Aufnahme 4 anzuordnen. Die Figuren 2 und 4 zeigen schematisch und ganz exemplarisch einen Wellengenerator 2 eines anderen Wellengeneratortyps, der ebenfalls einen Ausrichtungsindikator 6 aufweist. Allerdings weist dieser Wellengenerator 2 eine andere Ausrichtung des Ausrichtungsindikators 6 relativ zu seiner Montageausrichtung 7 auf. Wenn dieser andere Wellengenerator 2 in die Aufnahme aufgenommen wird, ergibt sich daher die in Figur 2 dargestellte Situation.

Bei der in Figur 1 dargestellten Situation sind die Vorverformungsausrichtung 3 und die Montageausrichtung 7 parallel zueinander angerichtet, weil die Form des vorverformten Wälzlagers 1 genau die dem Wellengeneratortyp des in der Aufnahme 4 angeordneten Wellengenerators 2 zugeordnete Form ist. Bei diesen Ausrichtungen der Vorverformungsausrichtung 3 und der Montageausrichtung 7 kann das radialflexible Wälzlager 1 problemlos auf den Lagersitz 5 des Wellengenerators 2 aufgeschoben werden.

Hierbei spielt es keine Rolle, ob beim Aufschieben das radialflexible Wälzlager 1 relativ zur Vorrichtung bewegt wird und der Wellengenerator 2 relativ zu Vorrichtung ortsfest bleibt oder umgekehrt. Insbesondere ist es auch möglich, dass sich beim Aufschieben sowohl das radialflexible Wälzlager 1, als auch der Wellengenerator, insbesondere samt der Aufnahme 4, relativ zur übrigen Vorrichtung bewegen.

Wird hingegen ein Wellengenerator 2, wie er als zweites Ausführungsbeispiel in Figur 4 dargestellt ist, eines Wellengeneratortyps in der Aufnahme angeordnet, der nicht der Form des vorverformten Wälzlagers 1 zugeordnet ist, sind die Vorverformungsausrichtung 3 und die Montageausrichtung 7 nicht parallel zueinander ausgerichtet, was ein Aufschieben des vorverformten radialflexiblen Wälzlagers 1 auf den Lagersitz 5 des Wellengenerators 2 (auch bei grober Gewaltanwendung) unmöglich macht, weil die im Bereich der Hochachse liegenden radialen Enden des Wellengenerators 2 bei dem Versuch des axialen Aufschiebens zwangsläufig großflächig mit der Stirnseite des radialflexiblen Wälzlagers 2 kollidieren würden.

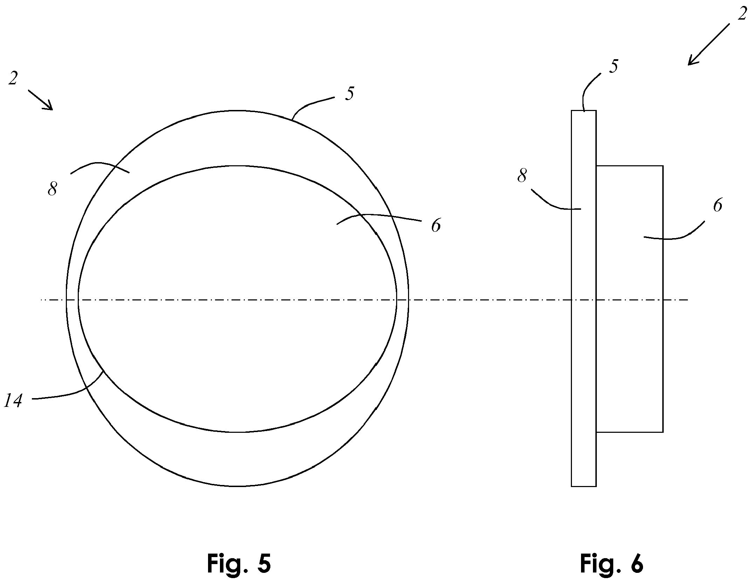

Die Figuren 5 und 6 zeigen ganz schematisch ein drittes Ausführungsbeispiel eines Wellengenerators 2 zur Verwendung mit einer erfindungsgemäßen Vorrichtung. Der Wellengenerator 2 weist einen Hauptabschnitt 8 mit einem Lagersitz 5 auf. An den Hauptabschnitt 8 schließt sich axial ein im Querschnitt Ausrichtungsindikator 6 mit einer ovalen Außenkontur 14 an.

Zwei Wellengeneratoren 2 dieser Art, die unterschiedlichen Wellengeneratortypen angehören, unterscheiden sich durch die unterschiedliche Ausrichtung der Hochachse des Hauptabschnitts 8 relativ zur Hochachse des ovalen Ausrichtungsindikators 6. Vorzugsweise weist die Aufnahme 4 der Vorrichtung zum Montieren eine Subaufnahme 13 auf, die eine zur Form des Ausrichtungsindikators 6 komplementäre Gegenform, in diesem Fall also eine wenigstens teilweise ovale Gegenform, aufweist.

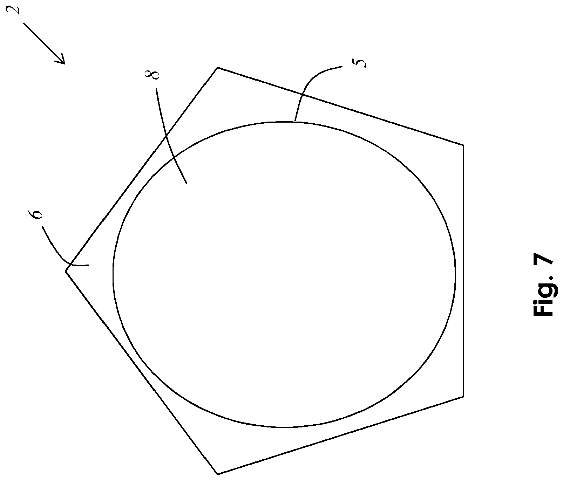

Figur 7 zeigt ganz schematisch ein viertes Ausführungsbeispiel eines Wellengenerators 2 zur Verwendung mit einer erfindungsgemäßen Vorrichtung. Der Wellengenerator 2 weist einen Hauptabschnitt 8 auf, der oval ausgebildet ist und einen Lagersitz 5 bereitstellt. An den Hauptabschnitt 8 schließt sich axial ein Ausrichtungsindikator 6 an, der radial größer ausgebildet ist als der Hauptabschnitt 8 und der gleichzeitig als Axialanschlag für das aufzuschiebende radialflexible Wälzlager 1 dient.

Der Ausrichtungsindikator 6 ist bei diesem Ausführungsbeispiel fünfeckig ausgebildet. Vorzugsweise ist die Subaufnahme 13 der Aufnahme 4 einer Vorrichtung zum Montieren dieser Art entsprechend komplementär gegengeformt.

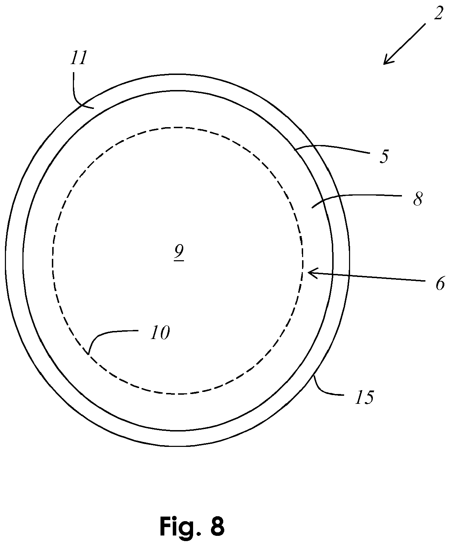

Figur 8 zeigt ganz schematisch ein fünftes Ausführungsbeispiel eines Wellengenerators 2 zur Verwendung mit einer erfindungsgemäßen Vorrichtung zum Montieren von radialflexiblen Wälzlagern 1 auf Wellengeneratoren 2.

Der in Figur 8 gezeigte Wellengenerator 2 weist einen Hauptabschnitt 8 auf, der oval ausgebildet ist und einen Lagersitz 5 für ein radialflexibles Wälzlager 1 bereitstellt. Der Hauptabschnitt 8 weist eine Ausnehmung 9 auf, die einen ersten Ausrichtungsindikator 6 bildet. Hierzu weist die Ausnehmung 9 umfangsseitig eine ovale Innenkontur 10 auf, die dazu bestimmt ist, mit einer komplementären Gegenkontur einer Subaufnahme 13 der Vorrichtung zum Montieren von radialflexiblen Wälzlagern 1 auf Wellengeneratoren 2 zusammenzuwirken. Die Wellengeneratoren 2 unterschiedlichen Wellengeneratortyps unterscheiden sich bei dieser Art von Wellengeneratoren 2 durch die Ausrichtung der Hochachse der ovalen Ausnehmung 9 relativ zur Hochachse des Hauptabschnitts 8, der den Lagersitz 5 aufweist.

Zusätzlich weist der Wellengenerator 2 einen weiteren Ausrichtungsindikator 11 mit einer ovalen Außenkontur 15 auf, der radial über den Hauptabschnitt 8 hervorsteht. Der weitere Ausrichtungsindikator 11 fungiert so zusätzlich als Axialanschlag für das axial aufzuschiebende radialflexible Wälzlager 1. Die Ausrichtung der Hochachse des weiteren Ausrichtungsindikators 11 ist parallel zur Hochachse der Ausnehmung 9 ausgerichtet.

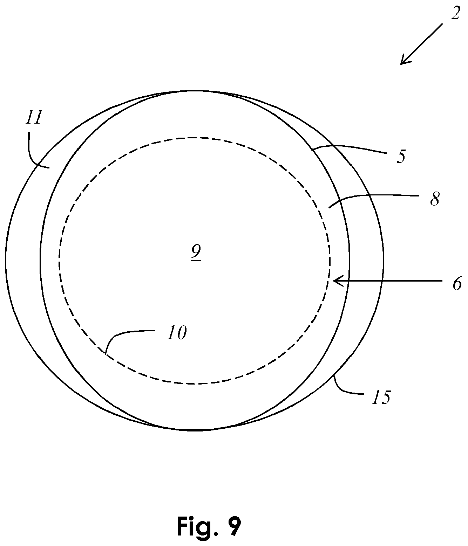

Fig. 9 zeigt ein Ausführungsbeispiel eines Wellengenerators 2 derselben Art, wie der in Fig. 8 gezeigte der Wellengenerator, wobei der in Figur 9 gezeigte Wellengenerator 2 jedoch einem anderen Wellengeneratortyp angehört. Es ist zu erkennen, dass der Wellengenerator 2 eine andere Ausrichtung der Hochachse der ovalen Ausnehmung 9 und der ovalen Außenkontur 15 des weiteren Ausrichtungsindikators 11 relativ zur Hochachse des Hauptabschnitts 8 aufweist.

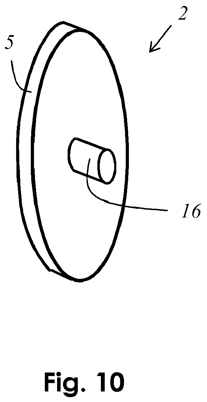

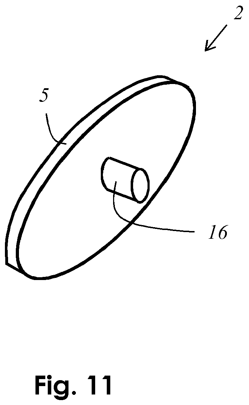

Fig. 10 zeigt schematisch das erste Ausführungsbeispiel eines Wellengenerators 2 von der anderen Seite. Fig. 11 zeigt schematisch das zweite Ausführungsbeispiel eines Wellengenerators 2 von der anderen Seite. Es ist jeweils zu erkennen, dass der Wellengenerator 2 eine Antriebswelle 16 aufweist, an die beispielsweise ein Antriebsmotor angekoppelt werden kann. In den übrigen Figuren wurde auf die Darstellung einer Antriebswelle des Wellengenerators der besseren Übersichtlichkeit halber verzichtet.

### Bezugszeichenliste:

- 1: radialflexibles Wälzlager
- 2: Wellengenerator
- 3: Vorverformungsausrichtung
- 4: Aufnahme
- 5: Lagersitz
- 6: Ausrichtungsindikator
- 7: Montageausrichtung
- 8: Hauptabschnitt
- 9: Ausnehmung
- 10: Innenkontur
- 11: weiterer Ausrichtungsindikator
- 12: Axialrichtung
- 13: Subaufnahme
- 14: Außenkontur
- 15: ovale Außenkontur
- 16: Antriebswelle

## Patentansprüche

1. Vorrichtung zum Montieren von radialflexiblen Wälzlagern (1) auf Wellengeneratoren (2), mittels der jeweils ein radialflexibles Wälzlager (1) oval, insbesondere elliptisch, vorverformbar und anschließend auf den Lagersitz (5) eines Wellengenerators (2) aufschiebbar ist, **dadurch gekennzeichnet, dass**
a. die Vorrichtung zur Verwendung mit wenigstens zwei unterschiedlichen Wellengeneratortypen ausgebildet ist und dazu ausgebildet ist, ein radialflexibles Wälzlager (1) in eine von wenigstens zwei unterschiedlichen ovalen, insbesondere elliptischen, Formen vorzuverformen, wobei jedem Wellengeneratortyp eine der unterschiedlichen ovalen, insbesondere elliptischen, Formen zugeordnet ist, und dass
b. eine Aufnahme (4) vorhanden ist, in der ein Wellengenerator (2), insbesondere zwangsgeführt, mit einer typspezifischen Montageausrichtung (7) seiner Hochachse anordenbar ist, wobei die Montageausrichtung (7) ausschließlich nur dann parallel zur Vorverformungsausrichtung (3) der Hochachse des jeweils vorverformten Wälzlagers (1) ist, wenn die Form des vorverformten Wälzlagers (1) die dem Wellengeneratortyp des in der Aufnahme angeordneten Wellengenerators (2) zugeordnete Form ist.

2. Vorrichtung nach Anspruch 1, **dadurch gekennzeichnet, dass**
a. den unterschiedlichen ovalen, insbesondere elliptischen, Formen, in die zu verarbeitende Wälzlager (1) vorverformbar sind, unterschiedliche Vorverformungsausrichtungen (3) der Hochachse der Wälzlager (1) zugeordnet sind, und/oder dass
b. die typspezifischen Montageausrichtungen (7) unterschiedlicher Wellengeneratortypen voneinander verschieden sind.

3. Vorrichtung nach Anspruch 1 oder 2, **dadurch gekennzeichnet, dass**
a. die Vorrichtung ein Vorverformungswerkzeug aufweist, mittels dem ein Wälzlager (1) wahlweise in eine von wenigstens zwei unterschiedlichen ovalen, insbesondere elliptischen, Formen vorverformbar ist oder dass
b. die Vorrichtung mehrere unterschiedliche Vorverformungswerkzeuge aufweist, von denen jedes zum Vorverformen in wenigstens eine der unterschiedlichen ovalen, insbesondere elliptischen, Formen spezialisiert ist.

4. Vorrichtung nach einem der Ansprüche 1 bis 3, **dadurch gekennzeichnet, dass**
a. die Aufnahme (4) für den Wellengenerator (2) dazu ausgebildet ist, mit einem Ausrichtungsindikator (6) des Wellengenerators (2) derart zusammen zu wirken, dass der Wellengenerator (2) ausschließlich mit seiner typspezifischen Montageausrichtung (7) oder ausschließlich mit seinen typspezifischen Montageausrichtungen (7) in die Aufnahme (4) einfügbar ist, und/oder dass
b. die Aufnahme (4) für den Wellengenerator (2) dazu ausgebildet ist, mechanisch, insbesondere ausschließlich mechanisch, mit einem Ausrichtungsindikator (6) des Wellengenerators (2) zusammen zu wirken.

5. Vorrichtung nach Anspruch 4, **dadurch gekennzeichnet, dass**
a. die Aufnahme (4) eine Subaufnahme (13) aufweist, die dazu ausgebildet und bestimmt ist, den Ausrichtungsindikator (6) des jeweiligen Wellengenerators (2), insbesondere formschlüssig, aufzunehmen, und/oder dass
b. die Aufnahme (4) eine Subaufnahme (13) aufweist, die dazu ausgebildet und bestimmt ist, den Ausrichtungsindikator (6) des jeweiligen Wellengenerators (2), der sich axial an einen den Lagersitz (5) beinhaltenden Hauptabschnitt (8) des Wellengenerators (2) anschließt, insbesondere formschlüssig, aufzunehmen, und/oder dass
c. die Aufnahme (4) eine Subaufnahme (13) aufweist, die dazu ausgebildet und bestimmt ist, den Ausrichtungsindikator (6) des jeweiligen Wellengenerators (2), insbesondere formschlüssig, aufzunehmen, der mit einem Hauptabschnitt (8) des Wellengenerators (2), der den Lagersitz (5) aufweist, gemeinsam einstückig aus demselben Stück Rohmaterial hergestellt ist, und/oder dass
d. die Aufnahme (4) eine Subaufnahme (13) aufweist, die dazu ausgebildet und bestimmt ist, den Ausrichtungsindikator (6) des jeweiligen Wellengenerators (2), insbesondere formschlüssig, aufzunehmen, der radial über den Hauptabschnitt (8) des Wellengenerators (2), der den Lagersitz (5) aufweist, hervorsteht, und/oder dass
e. die Aufnahme (4) eine Subaufnahme (13) aufweist, die dazu ausgebildet und bestimmt ist, den Ausrichtungsindikator (6) des jeweiligen Wellengenerators (2), insbesondere formschlüssig, aufzunehmen, der zusätzlich als Axialanschlag für das Wälzlager (1) fungiert, und/oder dass
f. die Aufnahme (4) eine Subaufnahme (13) aufweist, die dazu ausgebildet und bestimmt ist, den Ausrichtungsindikator (6) des jeweiligen Wellengenerators (2), insbesondere formschlüssig, aufzunehmen, der mit einer Außenkontur (14) mit der Subaufnahme (13) zusammen wirkt, und/oder dass
g. die Aufnahme (4) eine Subaufnahme (13) aufweist, die dazu ausgebildet und bestimmt ist, den Ausrichtungsindikator (6) des jeweiligen Wellengenerators (2), insbesondere formschlüssig, aufzunehmen, der mit einer Außenkontur (14) mit der Subaufnahme (13) zusammen wirkt, wobei die Außenkontur (14) im Querschnitt eine elliptische Form, oder eine polyederform oder eine hypotrochoidische Form aufweist, und/oder dass
h. die Aufnahme (4) eine Subaufnahme (13) aufweist, die dazu ausgebildet und bestimmt ist, den Ausrichtungsindikator (6) des jeweiligen Wellengenerators (2), insbesondere formschlüssig, aufzunehmen, der mit einer Innenkontur (10) mit der Subaufnahme (13) zusammen wirkt, und/oder dass
i. die Aufnahme (4) eine Subaufnahme (13) aufweist, die dazu ausgebildet und bestimmt ist, den Ausrichtungsindikator (6) des jeweiligen Wellengenerators (2), insbesondere formschlüssig, aufzunehmen, der mit einer Innenkontur (10) mit der Subaufnahme (13) zusammen wirkt, wobei die Innenkontur (10) im Querschnitt eine elliptische Form, oder eine polyederform oder eine hypotrochoidische Form aufweist.

6. Vorrichtung nach einem der Ansprüche 1 bis 5, **dadurch gekennzeichnet, dass**
a. mit der Vorrichtung Wellengeneratoren (2) verarbeitbar sind, bei denen der Lagersitz (5) des Wellengenerators (2) eines Wellengeneratortyps im Querschnitt eine andere ovale Form aufweist, als der Lagersitz (5) des Wellengenerators (2) eines anderen Wellengeneratortyps, und/oder dass
b. mit der Vorrichtung Wellengeneratoren (2) verarbeitbar sind, bei denen sich die Ausrichtung und/oder die Position des Lagersitzes (5) relativ zum Ausrichtungsindikator (6) wellengeneratortypabhängig voneinander unterscheiden, und/oder dass
c. mit der Vorrichtung Wellengeneratoren (2) verarbeitbar sind, die bei einem ersten Wellengeneratortyp eine erste Ausrichtung und/oder Position des Lagersitzes (5) relativ zum Ausrichtungsindikator (6) aufweisen und bei einem zweiten Wellengeneratortyp eine zweite, von der ersten verschiedene, Ausrichtung und/oder Position des Lagersitzes (5) relativ zum Ausrichtungsindikator (6) aufweisen.

7. Verfahren zum Montieren von radialflexiblen Wälzlagern (1) auf Wellengeneratoren (2), insbesondere unter Verwendung einer Vorrichtung nach einem der Ansprüche 1 bis 6, **dadurch gekennzeichnet, dass**
a. Wellengeneratoren (2) wenigstens zweier unterschiedliche Wellengeneratortypen verwendet werden, wobei jedem Wellengeneratortyp eine unterschiedliche ovale, insbesondere elliptische, Form eines zu montierenden Wälzlagers (1) zugeordnet ist, und dass
b. ein radialflexibles Wälzlager (1) in eine von wenigstens zwei unterschiedlichen ovalen, insbesondere elliptischen, Formen vorverformt wird, und dass
c. eine Aufnahme (4) vorhanden ist, in der ein Wellengenerator (2) zwangsgeführt mit einer typspezifischen Montageausrichtung (7) seiner Hochachse angeordnet wird, wobei die Montageausrichtung (7) ausschließlich nur dann parallel zur Vorverformungsausrichtung (3) der Hochachse des jeweils vorverformten Wälzlagers (1) ist, wenn die Form des vorverformten Wälzlagers (1) die dem Wellengeneratortyp des in der Aufnahme (4) angeordneten Wellengenerators (2) zugeordnete Form ist.

8. Verfahren nach Anspruch 7, **dadurch gekennzeichnet, dass**
a. den unterschiedlichen ovalen, insbesondere elliptischen, Formen unterschiedliche Vorverformungsausrichtungen (3) der Hochachse der Wälzlager (1) zugeordnet sind, und/oder dass
b. die typspezifischen Montageausrichtungen (7) unterschiedlicher Wellengeneratortypen voneinander verschieden sind.

9. Verfahren nach Anspruch 7 oder 8, **dadurch gekennzeichnet, dass**
a. ein Wälzlager (1) mittels eines Vorverformungswerkzeuges in eine von wenigstens zwei unterschiedlichen ovalen, insbesondere elliptischen, Formen vorverformt wird ist oder dass
b. jeweils eines von mehreren unterschiedliche Vorverformungswerkzeugen, von denen jedes zum Vorverformen in wenigstens eine der unterschiedlichen ovalen, insbesondere elliptischen, Formen spezialisiert ist, verwendet wird, um ein Wälzlager (1) in eine der unterschiedlichen ovalen, insbesondere elliptischen, Formen vorzuverformen.

10. Wellengenerator (2) zur Verwendung mit einer Vorrichtung nach einem der Ansprüche 1 bis 6 und/oder zur Verwendung bei der Ausführung eines Verfahrens nach einem der Ansprüche 7 bis 9.

11. Wellengenerator (2) nach Anspruch 10, **dadurch gekennzeichnet, dass**
a. sich der Ausrichtungsindikator (6) axial an einen den Lagersitz (5) beinhaltenden Hauptabschnitt (8) des Wellengenerators (2) anschließt, und/oder dass
b. ein Hauptabschnitt (8) des Wellengenerators (2), der den Lagersitz (5) aufweist, und der Ausrichtungsindikator (6) gemeinsam einstückig aus demselben Stück Rohmaterial hergestellt sind, und/oder dass
c. der Ausrichtungsindikator (6) radial über den Hauptabschnitt (8) des Wellengenerators (2), der den Lagersitz (5) aufweist, hervorsteht, und/oder dass
d. der Ausrichtungsindikator (6) zusätzlich als Axialanschlag für das Wälzlager (1) ausgebildet ist, und/oder dass
e. der Ausrichtungsindikator (6) dazu ausgebildet ist, mit einer Außenkontur (14) mit der Subaufnahme (13), insbesondere formschlüssig, zusammen zu wirken, und/oder dass
f. der Ausrichtungsindikator (6) dazu ausgebildet ist, mit einer Außenkontur (14) mit der Subaufnahme (13), insbesondere formschlüssig, zusammen zu wirken, wobei die Außenkontur (14) im Querschnitt eine ovale Form oder eine elliptische Form, oder eine polyederform oder eine hypotrochoidische Form aufweist, und/oder dass
g. der Ausrichtungsindikator (6) dazu ausgebildet ist. mit einer Innenkontur (10) mit der Subaufnahme (13), insbesondere formschlüssig, zusammen zu wirken, und/oder dass
h. der Ausrichtungsindikator (6) dazu ausgebildet ist. mit einer Innenkontur (10) mit der Subaufnahme (13), insbesondere formschlüssig, zusammen zu wirken, wobei die Innenkontur (10) im Querschnitt eine ovale Form oder eine elliptische Form, oder eine polyederform oder eine hypotrochoidische Form aufweist.

12. Ansammlung von mehreren Wellengeneratoren (2) nach Anspruch 10 oder 11 zur Verarbeitung mittels einer Vorrichtung nach einem der Ansprüche 1 bis 6 oder zur Verwendung bei der Ausführung eines Verfahrens nach einem der Ansprüche 7 bis 9, wobei jeder der Wellengeneratoren (2) einem von wenigstens zwei unterschiedlichen Wellengeneratortypen zugeordnet ist.

13. Ansammlung nach Anspruch 12, **dadurch gekennzeichnet, dass** jeder Wellengenerator (2) einen typspezifischen Ausrichtungsindikator (6) aufweist und sich die Ausrichtungsindikatoren (6) der Wellengeneratoren (2) unterschiedlichen Wellengeneratortyps
a. durch ihre Form voneinander unterscheiden und/oder
b. durch ihre Größe voneinander unterscheiden und/oder
c. durch ihre Ausrichtung relativ zu einem Hauptabschnitt (8) des Wellengenerators (2), der den Lagersitz (5) aufweist, voneinander unterscheiden.

14. Ansammlung nach Anspruch 12 oder 13, **dadurch gekennzeichnet, dass**
a. der Lagersitz (5) des Wellengenerators (2) eines Wellengeneratortyps im Querschnitt eine andere ovale Form aufweist, als der Lagersitz (5) des Wellengenerators (2) eines anderen Wellengeneratortyps, und/oder dass
b. sich die Ausrichtung und/oder die Position des Lagersitzes (5) relativ zum Ausrichtungsindikator (6) wellengeneratortypabhängig voneinander unterscheiden, und/oder dass
c. Wellengeneratoren (2) eines ersten Wellengeneratortyps eine erste Ausrichtung und/oder Position des Lagersitzes (5) relativ zum Ausrichtungsindikator (6) aufweisen und Wellengeneratoren (2) eines zweiten Wellengeneratortyps eine zweite, von der ersten verschiedene, Ausrichtung und/oder Position des Lagersitzes (5) relativ zum Ausrichtungsindikator (6) aufweisen.

15. Spannungswellengetriebe, das einen Wellengenerator (2) nach Anspruch 10 oder 11 beinhaltet.
